# FASCICULE DE BREVET EUROPEEN

(11) **EP 3 672 820 B1**
(45) Date de publication et mention de la délivrance du brevet: **18.01.2023**
(21) Numéro de dépôt: 18759158.1
(22) Date de dépôt: 23.07.2018
(51) Int. Cl.: B60K 6/48, B60W 10/02, B60W 10/08, B60W 20/40, B60W 50/00

(54) **DISPOSITIF DE CONTRÔLE DU COUPLE DE COMPENSATION FOURNI PAR UNE MACHINE MOTRICE NON-THERMIQUE D'UN VÉHICULE**
VORRICHTUNG ZUR REGELUNG DES VON EINER NICHTVERBRENNUNGSANTRIEBSMASCHINE EINES FAHRZEUGS BEREITGESTELLTEN AUSGLEICHSMOMENTS
DEVICE FOR CONTROLLING THE COMPENSATING TORQUE SUPPLIED BY A NON-COMBUSTION MOTIVE-POWER MACHINE OF A VEHICLE

(30) Priorité: 24.08.2017 FR 1757837
(43) Date de publication de la demande: 01.07.2020
(73) Titulaire: PSA Automobiles SA, 78300 Poissy (FR)
(72) Inventeur: ROCQ, Gaetan, 78125 LA BOISSIERE ECOLE (FR); MILHAU, Yohan, 78630 ORGEVAL (FR)
(86) Numéro de dépôt international: PCT/FR2018/051882
(87) Numéro de publication internationale: WO 2019/038493

(56) Documents cités:
- EP-A1- 2 543 568
- DE-A1-102012 007 322

## Description

L'invention concerne les véhicules ayant une chaîne de transmission comportant au moins une première machine motrice couplée à un embrayage également couplé à une seconde machine motrice, non-thermique et également couplée à un arbre primaire de moyens de changement de rapport couplés à un train.

On entend ici par « machine motrice non-thermique » une machine agencée de manière à fournir ou récupérer du couple pour déplacer un véhicule, soit seule soit en complément d'une autre machine motrice thermique ou non-thermique. Il pourra par exemple s'agir d'une machine (ou moteur) électrique, d'une machine hydraulique, d'une machine pneumatique (ou à air comprimé), ou d'un volant d'inertie.

Comme le sait l'homme de l'art, certains véhicules, éventuellement de type automobile, comprennent une chaîne de transmission dans laquelle la première machine motrice est propre à être couplée à au moins un train via, dans l'ordre, un embrayage, une seconde machine motrice (non-thermique) et des moyens de changement de rapport.

Les chaînes de transmission précitées sont généralement gérées par un calculateur de supervision qui comprend un dispositif de gestion chargé de gérer son fonctionnement et notamment les couples qui doivent être respectivement fournis à chaque instant par les première et seconde machines motrices et l'embrayage.

L'embrayage est chargé de transmettre le couple fourni par la première machine motrice par glissement entre le régime de fonctionnement en cours de cette dernière et le régime de fonctionnement en cours de la seconde machine motrice qui est couplée aux roues motrices. Cela peut résulter du fait que la première machine motrice n'est exploitable qu'au-dessus d'un régime minimum (dit de ralenti).

Dans ce type de chaîne de transmission le couple qui doit être fourni aux roues motrices (par les moyens de changement de rapport) est égal au couple, que reçoit l'arbre primaire (de ces derniers), multiplié par le rapport de démultiplication des moyens de changement de rapport. Le couple reçu par l'arbre primaire est égal à la somme du couple fourni par les première et seconde machines motrices lorsque l'embrayage est fermé ou bien par la somme du couple fourni par l'embrayage et la seconde machine motrice lorsque l'embrayage est dans un état glissant.

On connait par exemple des documents de brevets EP-A1-2 543 568 ou DE-A1-10 2012 007322 un dispositif de contrôle conforme au préambule de la revendication 1.

Actuellement, l'embrayage est utilisé pour réaliser sur l'arbre primaire une consigne de couple qui est représentative de la volonté du conducteur, et on utilise la seconde machine motrice pour compenser l'écart de couple entre cette consigne de couple et le couple effectivement fourni par l'embrayage à la seconde machine motrice. Comme il est très difficile, voire impossible, de déterminer ce couple effectivement fourni par l'embrayage, on le remplace par une estimée de couple d'embrayage. Cette estimée est par exemple déterminée en fonction de la technologie de l'actionneur et d'informations qui sont représentatives du fonctionnement de l'embrayage, comme par exemple la pression d'huile interne, la position de son actionneur, la température d'huile ou la température de friction.

Cependant, il s'avère que dans certaines situations de vie (comme par exemple par temps chaud ou froid, ou en présence d'un embrayage usé), l'estimée de couple d'embrayage est imprécise, voire très différente du couple qui est effectivement transmis par l'embrayage. Par conséquent, il arrive relativement fréquemment que la seconde machine motrice compense un écart entre l'estimée de couple d'embrayage et la consigne de couple (représentative de la volonté du conducteur) qui est erroné, et donc la seconde machine motrice ne compense pas correctement les erreurs entre la consigne de couple et le couple effectivement transmis aux roues motrices. Cette erreur de compensation peut alors provoquer au moins l'un des inconvénients suivants :
- une perte de performance d'accélération du véhicule,
- une difficulté de maitrise fine du couple transmis aux roues motrices pour des situations de manoeuvre du véhicule,
- un mauvais agrément de conduite du véhicule,
- une mauvaise maitrise de la consommation électrique ou de carburant du véhicule,
- un risque de déplacement du véhicule selon un sens opposé au souhait de son conducteur,
- une sur-sollicitation de certains équipements, comme par exemple l'embrayage, et donc une usure prématurée.

L'invention a donc notamment pour but d'améliorer la situation.

Elle propose notamment à cet effet un dispositif de contrôle destiné à être associé à une chaîne de transmission comprenant une première machine motrice (thermique ou non-thermique) couplée à un embrayage également couplé à une seconde machine motrice, non-thermique et également couplée à un arbre primaire de moyens de changement de rapport couplés à un train d'un véhicule.

Ce dispositif de contrôle se caractérise par le fait qu'il comprend :
- des moyens d'analyse déterminant un couple d'embrayage observé en fonction d'au moins une information représentative d'un fonctionnement en cours de la première machine motrice,
- des moyens annexes de gestion déterminant une estimée d'un couple fourni par ledit embrayage en fonction d'au moins une information représentative du fonctionnement de l'embrayage, notamment une pression d'huile interne dans l'embrayage ou une position d'un actionneur de l'embrayage,
- des moyens de pondération déterminant un couple pondéré fourni par l'embrayage en fonction de l'estimée d'un couple fourni par l'embrayage et du couple d'embrayage observé, et
- des moyens de contrôle déterminant un couple de compensation que doit fournir la seconde machine motrice en complément du couple pondéré déterminé, en fonction d'une demande de couple sur l'arbre primaire.

Grâce à l'utilisation du couple pondéré à la place de l'estimée du couple fourni par l'embrayage pour déterminer le couple de compensation, ce dernier n'est donc pas erroné (ou très peu), et donc la seconde machine motrice compense correctement les erreurs entre la demande de couple sur l'arbre primaire et le couple effectivement transmis aux roues motrices.

Le dispositif de contrôle selon l'invention peut comporter d'autres caractéristiques qui peuvent être prises séparément ou en combinaison, et notamment :
- ses moyens d'analyse peuvent utiliser au moins une information qui est choisie parmi un couple en cours de fourniture par la première machine motrice, un régime de fonctionnement en cours de la première machine motrice, une inertie en cours de la première machine motrice, une température en cours dans un circuit de refroidissement de la première machine motrice, et un gradient en cours du régime de fonctionnement en cours de la première machine motrice ;
- ses moyens de pondération peuvent déterminer un couple pondéré fourni par l'embrayage en pondérant l'estimée du couple fourni par l'embrayage par une valeur fonction du couple d'embrayage observé ;
   ➢ ses moyens de pondération peuvent utiliser une valeur qui est fonction d'un écart entre le couple d'embrayage observé et l'estimée du couple fourni par l'embrayage.

L'invention propose également un véhicule, éventuellement de type automobile, et comprenant, d'une première part, une chaîne de transmission comportant une première machine motrice (thermique ou non-thermique) couplée à un embrayage également couplé à une seconde machine motrice, non-thermique et également couplée à un arbre primaire de moyens de changement de rapport couplés à un train, d'une deuxième part, un dispositif de gestion gérant le fonctionnement de la chaîne de transmission, et, d'une troisième part, un dispositif de contrôle du type de celui présenté ci-avant.

Le véhicule selon l'invention peut comporter d'autres caractéristiques qui peuvent être prises séparément ou en combinaison, et notamment :
- son dispositif de gestion peut utiliser le couple de compensation lorsque la chaîne de transmission est dans une situation de vie choisie parmi une phase de régulation du régime de fonctionnement de la première machine motrice, et une phase de démarrage et d'engagement de la première machine motrice lors d'une phase de roulage ;
- son dispositif de gestion peut comprendre le dispositif de contrôle ;
- sa seconde machine motrice peut être choisie parmi un moteur électrique, une machine hydraulique, une machine pneumatique et un volant d'inertie ;
- sa première machine motrice peut être un moteur thermique.

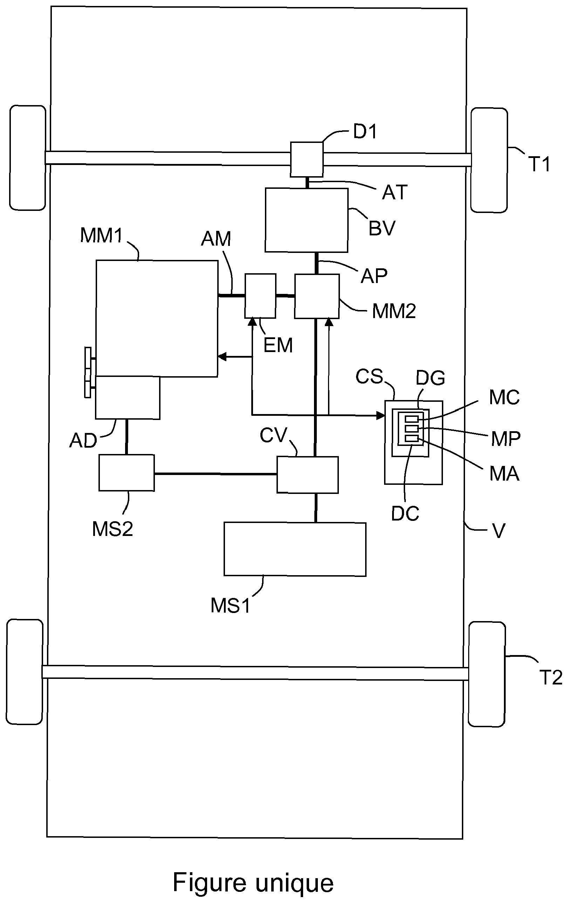

D'autres caractéristiques et avantages de l'invention apparaîtront à l'examen de la description détaillée ci-après, et du dessin annexé, sur lequel l'unique figure illustre schématiquement et fonctionnellement un véhicule comprenant une chaîne de transmission et un calculateur de supervision équipé d'un dispositif de contrôle selon l'invention.

L'invention a notamment pour but de proposer un dispositif de contrôle DC destiné à équiper un véhicule V et à contrôler le couple de compensation cc1 devant être fourni par une (seconde) machine motrice MM2 non-thermique et intercalée entre un embrayage EM et des moyens de changement de rapport BV.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule comprenant une chaîne de transmission comportant au moins une première machine motrice couplée à un embrayage également couplé à une seconde machine motrice, non-thermique et également couplée à un arbre primaire de moyens de changement de rapport couplés à un train. Par conséquent, l'invention concerne non seulement les véhicules terrestres, mais également les bateaux et les avions.

Il est rappelé que l'on entend ici par « machine motrice non-thermique » une machine agencée de manière à fournir ou récupérer du couple pour déplacer un véhicule, soit seule soit en complément d'une autre machine motrice thermique ou non-thermique. Il pourra par exemple s'agir d'une machine (ou moteur) électrique, d'une machine hydraulique, d'une machine pneumatique (ou à air comprimé), ou d'un volant d'inertie.

Par ailleurs, on entend ici par « machine motrice thermique » une machine ou un moteur consommant du carburant ou des produits chimiques. Par conséquent, il pourra notamment s'agir d'un moteur thermique (à essence ou au gazole), d'un réacteur, d'un turboréacteur ou d'un moteur chimique.

On a schématiquement représenté sur l'unique figure un véhicule V comprenant une chaîne de transmission, un calculateur de supervision CS propre à superviser (ou gérer) le fonctionnement de la chaîne de transmission, et un dispositif de contrôle DC selon l'invention.

La chaîne de transmission comprend ici, notamment, une première machine motrice MM1, un arbre moteur AM, un embrayage EM, une seconde machine motrice MM2 non-thermique, des moyens de changement de rapport BV, un premier moyen de stockage d'énergie MS1 et un arbre de transmission AT.

On considère dans ce qui suit, à titre d'exemple non limitatif, que la première machine motrice MM1 est thermique. Il s'agit par exemple d'un moteur thermique. Mais l'invention n'est pas limitée à ce type de première machine motrice. En effet, la première machine motrice MM1 peut être thermique ou non-thermique.

Cette première machine motrice MM1 (ici un moteur thermique) comprend un vilebrequin (non représenté) qui est solidarisé fixement à l'arbre moteur AM afin d'entraîner ce dernier (AM) en rotation. Par ailleurs, cette première machine motrice MM1 est destinée à fournir du couple pour au moins un premier train T1 (ici de roues), via l'embrayage EM, la seconde machine motrice MM2, et les moyens de changement de rapport BV.

Par exemple, ce premier train T1 est situé à l'avant du véhicule V, et couplé à l'arbre de transmission AT, de préférence, et comme illustré, via un différentiel (ici avant) D1. Mais dans une variante ce premier train T1 pourrait être situé à l'arrière du véhicule V.

L'embrayage EM est chargé de coupler/découpler l'arbre moteur AM (couplé à la première machine motrice MM1) à/de la seconde machine motrice MM2, sur ordre du calculateur de supervision CS, afin de communiquer du couple qu'elle produit. Cet embrayage EM peut être de tout type dès lors qu'il peut prendre au moins un premier état (couplé) dans lequel il assure le couplage entre les première MM1 et seconde MM2 machines motrices, un deuxième état (découplé) dans lequel il découple la première machine motrice MM1 de la seconde machine motrice MM2, et un troisième état glissant.

La seconde machine motrice MM2 (non-thermique) est couplée au premier moyen de stockage d'énergie MS1 afin d'être alimentée en énergie ou d'alimenter ce dernier (MS1) en énergie. Elle est également couplée à la sortie de l'embrayage EM et à l'arbre primaire AP des moyens de changement de rapport BV.

On considère dans ce qui suit, à titre d'exemple non limitatif, que la seconde machine motrice MM2, non-thermique, est de type électrique. Mais l'invention n'est pas limitée à ce type de seconde machine motrice non-thermique. Ainsi, elle concerne également et notamment les machines (ou moteurs) hydrauliques, les machines (ou moteurs) pneumatiques (ou à air comprimé), et les volants d'inertie.

Etant donné que l'on considère ici que la seconde machine motrice MM2 est de type électrique, le premier moyen de stockage d'énergie MS1 qui l'alimente en énergie est agencé pour stocker de l'énergie électrique, par exemple en basse tension (typiquement 220 V à titre illustratif).

Les moyens de changement de rapport BV peuvent, par exemple, être agencés sous la forme d'une boîte de vitesses. Ils comprennent l'arbre primaire AP qui est destiné à recevoir du couple de la seconde machine motrice MM2, et un arbre secondaire destiné à recevoir ce couple via l'arbre primaire AP afin de le communiquer à l'arbre de transmission AT auquel il est couplé et qui est couplé indirectement aux roues motrices (ici avant) du véhicule V via le différentiel D1. Mais dans une variante de réalisation les moyens de changement de rapport BV pourraient, par exemple, comprendre au moins un train épicycloïdal comprenant un, deux ou trois synchronisateurs. On notera que les moyens de changement de rapport BV doivent proposer au moins deux rapports différents.

On notera également, comme illustré non limitativement sur l'unique figure, que la chaîne de transmission peut également comprendre un démarreur ou un alterno-démarreur AD couplé à la première machine motrice MM1 et chargé de lancer ce dernier (MM1) afin de lui permettre de démarrer. Ce lancement se fait grâce à de l'énergie électrique qui est, par exemple et comme illustré non limitativement, stockée dans un second moyen de stockage MS2. Ce second moyen de stockage MS2 peut être agencé sous la forme d'une batterie très basse tension (par exemple 12 V, 24 V ou 48V). Cette dernière (MS2) peut, par exemple, alimenter un réseau de bord auquel sont connectés des équipements électriques du véhicule V. On notera que le second moyen de stockage MS2 peut, comme illustré non limitativement, être couplé au premier moyen de stockage d'énergie MS1 et à la seconde machine motrice MM2 via un convertisseur CV de type DC/DC, afin de pouvoir être rechargé.

Les fonctionnements des première MM1 et seconde MM2 machines motrices et de l'embrayage EM peuvent être contrôlés par le calculateur de supervision CS, et plus précisément par un dispositif de gestion DG que comprend ce dernier (DG).

On notera que la chaîne de transmission pourrait également comprendre une troisième machine motrice non-thermique en complément de ses première MM1 et seconde MM2 machines motrices. Dans ce cas, cette troisième machine motrice non-thermique est chargée de fournir du couple pour un second train T2 du véhicule V, par exemple situé à l'arrière, à partir de l'énergie stockée dans le premier moyen de stockage d'énergie MS1. Elle fonctionne alors soit seule soit en complément de la première machine motrice MM1 et/ou la seconde machine motrice MM2, en fonction des commandes fournies par le calculateur de supervision CS.

Comme indiqué précédemment, l'invention propose un dispositif de contrôle DC destiné à contrôler le couple de compensation cc1 qui doit être fourni par la seconde machine motrice MM2 du véhicule V, afin de compenser autant que possible les erreurs entre une consigne de couple cc2 (représentative de la volonté du conducteur du véhicule V) et le couple ctr qui est effectivement transmis (ici) aux roues motrices du premier train T1.

Dans l'exemple non limitatif illustré sur l'unique figure, le dispositif de contrôle DC fait partie du calculateur de supervision CS. Il fait même plus précisément partie du dispositif de gestion DG. Mais cela n'est pas obligatoire. Ce dispositif de contrôle DC pourrait en effet être un équipement couplé au calculateur de supervision CS, directement ou indirectement, ou bien couplé au dispositif de gestion DG au sein du calculateur de supervision CS. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Un dispositif de contrôle DC, selon l'invention, comprend des moyens d'analyse MA, des moyens de pondération MP, et des moyens de contrôle MC.

Les moyens d'analyse MA sont agencés pour déterminer un couple d'embrayage observé ceo en fonction d'au moins une information qui est représentative d'un fonctionnement en cours de la première machine motrice MM1.

Par exemple, les moyens d'analyse MA peuvent utiliser au moins une information qui est choisie parmi un couple en cours de fourniture par la première machine motrice MM1, un régime de fonctionnement en cours de la première machine motrice MM1, une inertie en cours de la première machine motrice MM1, une température en cours dans un circuit de refroidissement de la première machine motrice MM1, et un gradient en cours du régime de fonctionnement en cours de la première machine motrice MM1. Toutes ces informations sont accessibles dans le véhicule V, éventuellement au moins en partie dans le calculateur de supervision CS. De préférence, les moyens d'analyse MA utilisent plusieurs de ces informations.

Par exemple, le couple d'embrayage observé ceo peut être le couple fourni par la première machine motrice MM1 moins le gradient du régime en cours de la première machine motrice MM1 (en rad/s), lui-même multiplié par l'inertie de la première machine motrice MM1.

Les moyens de pondération MP sont agencés pour déterminer un couple pondéré cpe fourni par l'embrayage EM en fonction d'une estimée ece d'un couple fourni par l'embrayage EM et du couple d'embrayage observé ceo.

L'estimée ece du couple fourni par l'embrayage EM peut, par exemple, être déterminée en fonction de la technologie de son actionneur et d'informations qui sont représentatives du fonctionnement de l'embrayage EM. Ces informations peuvent, par exemple, être choisies parmi la pression d'huile interne dans l'embrayage EM, la position de l'actionneur de l'embrayage EM, et la température d'huile ou la température de friction dans l'embrayage EM. Toutes ces informations sont accessibles dans le véhicule V, éventuellement au moins en partie dans le calculateur de supervision CS. De préférence, plusieurs de ces informations sont utilisées.

Par exemple, l'estimée de couple ece peut être calculée à partir d'une position d'actionneur mesurée et d'une table de conversion faisant correspondre une position d'actionneur à un couple transmis estimé.

Cette estimée de couple ece peut être déterminée par le dispositif de gestion DG ou bien par un dispositif annexe de gestion de l'embrayage et/ou de la boîte de vitesses BV (souvent nommé TCU (pour « Transmission Control Unit » - unité de contrôle de transmission) qui communique avec le dispositif de gestion DG via un réseau de communication embarqué dans le véhicule V et reliant les différents calculateurs.

Par exemple, les moyens de pondération MP peuvent déterminer un couple pondéré cpe fourni par l'embrayage EM en pondérant l'estimée ece du couple fourni par l'embrayage EM par une valeur vp qui est, par exemple, fonction du couple d'embrayage observé ceo. La valeur vp peut dépendre également d'une température mesurée de l'actionneur qui pilote l'embrayage EM.

En présence de l'option précédente, les moyens de pondération MP peuvent utiliser une valeur de pondération vp qui est fonction d'un écart entre le couple d'embrayage observé ceo et l'estimée ece du couple fourni par l'embrayage EM.

Les moyens de contrôle MC sont agencés pour déterminer un couple de compensation cc1 que doit fournir la seconde machine motrice MM2 en complément du couple pondéré cpe, venant d'être déterminé par les moyens de pondération MP, en fonction d'une demande de couple sur l'arbre primaire AP (c'est-à-dire la consigne de couple cc2 qui est représentative de la volonté du conducteur).

Cette demande de couple sur l'arbre primaire AP (ou cc2) est déterminée par le dispositif de gestion DG en fonction notamment du pourcentage d'enfoncement de la pédale d'accélérateur du véhicule V et de la vitesse du véhicule V. Par ailleurs, on comprendra que le couple qui est effectivement transmis à l'arbre primaire AP est égal à la somme du couple de compensation cc1 et du couple pondéré cpe.

Le couple pondéré cpe étant beaucoup plus fiable que l'estimée ece du couple fourni par l'embrayage EM (utilisé dans l'art antérieur), le couple de compensation cc1 qui est utilisé par le dispositif de gestion DG n'est donc pas erroné, ou alors faiblement. Par conséquent, la seconde machine motrice MM2 compense désormais correctement les erreurs entre la demande de couple sur l'arbre primaire AP (ou cc2) et le couple ctr qui est effectivement transmis aux roues motrices.

On notera que le dispositif de gestion DG peut utiliser le couple de compensation cc1 quelle que soit la situation de vie de la chaîne de transmission ou bien seulement dans certaines situations de vie de la chaîne de transmission. Par exemple, dans la dernière alternative ces situations de vie peuvent être choisies parmi une phase de régulation du régime de fonctionnement de la première machine motrice MM1, une phase de démarrage et d'engagement de la première machine motrice MM1 lors d'une phase de roulage, et une phase de décollage du véhicule V.

Par conséquent, le dispositif de contrôle DC peut fonctionner de façon continue, par exemple périodiquement, ou bien de façon ponctuelle, par exemple à la demande du dispositif de gestion DG (ou de son calculateur de supervision CS).

L'invention offre plusieurs avantages, parmi lesquels :
- elle permet d'augmenter le potentiel de couple de la première machine motrice MM1 transmis lors des phases de glissement de l'embrayage EM malgré des performances dégradées de la première machine motrice MM1,
- elle permet de réduire le temps de glissement de l'embrayage EM et donc la chauffe de ce dernier (EM), ce qui permet d'augmenter sa durée de vie tout en réduisant la consommation d'énergie et la production de certains polluants,
- elle permet d'assurer les performances d'accélération du véhicule V,
- elle permet une maitrise fine du couple transmis aux roues motrices pour des situations de manoeuvre du véhicule V,
- elle permet d'assurer un bon agrément de conduite du véhicule V,
- elle permet d'assurer une bonne maitrise de la consommation électrique et/ou de carburant,
- elle permet d'assurer le sens de déplacement du véhicule V souhaité par son conducteur.

## Revendications

1. Dispositif de contrôle (DC) pour une chaîne de transmission comprenant une première machine motrice (MM1) couplée à un embrayage (EM) également couplé à une seconde machine motrice (MM2), non-thermique et également couplée à un arbre primaire (AP) de moyens de changement de rapport (BV) couplés à un train (T1) d'un véhicule (V), **caractérisé en ce qu'**il comprend i) des moyens d'analyse (MA) déterminant un couple d'embrayage observé en fonction d'au moins une information représentative d'un fonctionnement en cours de ladite première machine motrice (MM1), ii) des moyens annexes de gestion déterminant une estimée d'un couple fourni par ledit embrayage (EM) en fonction d'au moins une information représentative du fonctionnement de l'embrayage (EM), notamment une pression d'huile interne dans l'embrayage (EM) ou une position d'un actionneur de l'embrayage (EM) iii) des moyens de pondération (MP) déterminant un couple pondéré fourni par ledit embrayage (EM) en fonction de ladite estimée d'un couple fourni par ledit embrayage (EM) et dudit couple d'embrayage observé, et iiii) des moyens de contrôle (MC) déterminant un couple de compensation que doit fournir ladite seconde machine motrice (MM2) en complément dudit couple pondéré déterminé, en fonction d'une demande de couple sur ledit arbre primaire (AP).

2. Dispositif selon la revendication 1, **caractérisé en ce que** lesdits moyens d'analyse (MA) utilisent au moins une information choisie parmi un couple en cours de fourniture par ladite première machine motrice (MM1), un régime de fonctionnement en cours de ladite première machine motrice (MM1), une inertie en cours de ladite première machine motrice (MM1), une température en cours dans un circuit de refroidissement de ladite première machine motrice (MM1), et un gradient en cours dudit régime de fonctionnement en cours de ladite première machine motrice (MM1).

3. Dispositif selon la revendication 1 ou 2, **caractérisé en ce que** lesdits moyens de pondération (MP) déterminent un couple pondéré fourni par ledit embrayage (EM) en pondérant ladite estimée du couple fourni par l'embrayage (EM) par une valeur fonction dudit couple d'embrayage observé.

4. Dispositif selon la revendication 3, **caractérisé en ce que** lesdits moyens de pondération (MP) utilisent une valeur fonction d'un écart entre ledit couple d'embrayage observé et ladite estimée du couple fourni par l'embrayage (EM).

5. Véhicule (V) comprenant i) une chaîne de transmission comportant une première machine motrice (MM1) couplée à un embrayage (EM) également couplé à une seconde machine motrice (MM2), non-thermique et également couplée à un arbre primaire (AP) de moyens de changement de rapport (BV) couplés à un train (T1), et ii) un dispositif de gestion (DG) gérant le fonctionnement de ladite chaîne de transmission, **caractérisé en ce qu'**il comprend en outre un dispositif de contrôle (DC) selon l'une des revendications précédentes.

6. Véhicule selon la revendication 5, **caractérisé en ce que** ledit dispositif de gestion (DG) utilise ledit couple de compensation lorsque ladite chaîne de transmission est dans une situation de vie choisie parmi une phase de régulation du régime de fonctionnement de ladite première machine motrice (MM1), et une phase de démarrage et d'engagement de ladite première machine motrice (MM1) lors d'une phase de roulage.

7. Véhicule selon la revendication 5 ou 6, **caractérisé en ce que** ledit dispositif de gestion (DG) comprend ledit dispositif de contrôle (DC).

8. Véhicule selon l'une des revendications 5 à 7, **caractérisé en ce que** ladite seconde machine motrice (MM2) est choisie parmi un moteur électrique, une machine hydraulique, une machine pneumatique et un volant d'inertie.

9. Véhicule selon l'une des revendications 5 à 8, **caractérisé en ce que** ladite première machine motrice (MM1) est un moteur thermique.

10. Véhicule selon l'une des revendications 5 à 9, **caractérisé en ce qu'**il est de type automobile.

## Patentansprüche

1. Steuergerät (DC) für eine Übertragungskette umfassend eine erste Antriebsmaschine (MM1), die mit einer Kupplung (EM) gekoppelt ist, die auch mit einer zweiten Antriebsmaschine (MM2) gekoppelt ist, nicht thermisch und auch mit einer Primärwelle (AP) einer Gangwechseleinrichtung (BV) gekoppelt ist, die mit einem Zug gekoppelt ist (T1) eines Fahrzeugs (V), **dadurch gekennzeichnet, dass** es umfasst: i) Analysemittel (MA), die ein beobachtetes Kupplungsdrehmoment als Funktion von mindestens einer Information bestimmen, die einen Betriebsstrom der ersten Antriebsmaschine (MM1) darstellt. , ii) Hilfsverwaltungsmittel, die einen Schätzwert eines von der Kupplung (EM) gelieferten Drehmoments in Abhängigkeit von mindestens einer Information bestimmen, die für den Betrieb der Kupplung (EM) repräsentativ ist, insbesondere ein interner Öldruck in der Kupplung (EM) oder eine Position eines Kupplungsbetätigers (EM). iii) Gewichtungsmittel (MP), die ein gewichtetes Drehmoment bestimmen, das von der Kupplung (EM) geliefert wird, als eine Funktion der Schätzung eines gelieferten Drehmoments durch die Kupplung (EM) und das beobachtete Kupplungsdrehmoment, und iii) Steuermittel (MC), die ein Kompensationsdrehmoment bestimmen, das die zweite Antriebsmaschine (MM2) zusätzlich zu dem gewichteten Drehmoment liefern muss, das als Funktion einer Drehmomentanforderung bestimmt wird die Primärwelle (AP).

2. Device according to Claim 1, **characterized in that** the said analysis means (MA) use at least one item of information chosen from among a torque being supplied by the said first driving machine (MM1), a current operating mode of the said first machine driving machine (MM1), a current inertia of said first driving machine (MM1), a current temperature in a cooling circuit of said first driving machine (MM1), and a current gradient of said current operating regime of said first driving machine (MM1).

3. Vorrichtung nach Anspruch 1 oder 2, **dadurch gekennzeichnet, dass** die Gewichtungsmittel (MP) ein von der Kupplung (EM) geliefertes gewichtetes Drehmoment bestimmen, indem sie die Schätzung des von der Kupplung (EM) gelieferten Drehmoments mit einem Wert gewichten, der von abhängt die besagte Drehmomentkupplung beobachtet.

4. Vorrichtung nach Anspruch 3, **dadurch gekennzeichnet, dass** die Gewichtungsmittel (MP) einen Wert verwenden, der eine Funktion einer Differenz zwischen dem beobachteten Kupplungsdrehmoment und der Schätzung des von der Kupplung (EM) gelieferten Drehmoments ist.

5. Fahrzeug (V), umfassend i) eine Getriebekette, umfassend eine erste Antriebsmaschine (MM1), die mit einer Kupplung (EM) gekoppelt ist, die auch mit einer zweiten Antriebsmaschine (MM2) gekoppelt ist, nicht-thermisch und auch mit einem Zahnrad der Primärwelle (AP) gekoppelt ist Umschaltmittel (BV), die mit einem Zug (T1) gekoppelt sind, und ii) eine Verwaltungsvorrichtung (DG), die den Betrieb der Übertragungskette verwaltet, **dadurch gekennzeichnet, dass** sie ferner eine Steuervorrichtung (DC) nach einem der vorhergehenden Ansprüche umfasst.

6. Fahrzeug nach Anspruch 5, **dadurch gekennzeichnet, dass** das genannte die Verwaltungsvorrichtung (DG) das Kompensationsdrehmoment verwendet, wenn sich die Übertragungskette in einer Lebenssituation befindet, die aus einer Phase zum Regulieren der Betriebsgeschwindigkeit der ersten Antriebsmaschine (MM1) und einer Anlauf- und Eingriffsphase der ersten Antriebsmaschine ausgewählt ist (MM1) während einer Fahrphase.

7. Fahrzeug nach Anspruch 5 oder 6, **dadurch gekennzeichnet, dass** das besagte Verwaltungsvorrichtung (DG) die Steuervorrichtung (DC) umfasst.

8. Fahrzeug nach einem der Ansprüche 5 bis 7, **dadurch gekennzeichnet, dass** die zweite Antriebsmaschine (MM2) aus einem Elektromotor ausgewählt ist. eine hydraulische Maschine, eine pneumatische Maschine und ein Schwungrad.

9. Fahrzeug nach einem der Ansprüche 5 bis 8, **dadurch gekennzeichnet, dass** die erste Antriebsmaschine (MM1) eine Wärmekraftmaschine ist.

10. Fahrzeug nach einem der Ansprüche 5 bis 9, **dadurch gekennzeichnet, dass** es vom Automobiltyp ist.

## Claims

1. Control device (DC) for a transmission chain comprising a first driving machine (MM1) coupled to a clutch (EM) also coupled to a second driving machine (MM2), non-thermal and also coupled to a primary shaft (AP) of gear change means (BV) coupled to a train (T1) of a vehicle (V), **characterized in that** it comprises i) analysis means (MA) determining an observed clutch torque as a function of at least one item of information representative of an operation current of said first prime mover (MM1), ii) ancillary management means determining an estimate of a torque supplied by said clutch (EM) as a function of at least one item of information representative of the operation of the clutch (EM) , in particular an internal oil pressure in the clutch (EM) or a position of a clutch actuator (EM) iii) weighting means (MP) determining a weighted torque supplied by said clutch (EM) as a function of said estimate of a torque supplied by said clutch (EM) and of said observed clutch torque, and iiii) control means (MC) determining a compensation torque which said second driving machine (MM2) must supply in addition to said weighted torque determined as a function of a torque demand on said input shaft (AP).

2. Device according to Claim 1, **characterized in that** the said analysis means (MA) use at least one item of information chosen from among a torque being supplied by the said first driving machine (MM1), a current operating mode of the said first machine driving machine (MM1), a current inertia of said first driving machine (MM1), a current temperature in a cooling circuit of said first driving machine (MM1), and a current gradient of said current operating regime of said first driving machine (MM1).

3. Device according to Claim 1 or 2, **characterized in that** the said weighting means (MP) determine a weighted torque supplied by the said clutch (EM) by weighting the said estimate of the torque supplied by the clutch (EM) by a value depending on the said torque clutch observed.

4. Device according to Claim 3, **characterized in that** the said weighting means (MP) use a value which is a function of a difference between the said clutch torque observed and the said estimate of the torque supplied by the clutch (EM).

5. Vehicle (V) comprising i) a transmission chain comprising a first driving machine (MM1) coupled to a clutch (EM) also coupled to a second driving machine (MM2), non-thermal and also coupled to a primary shaft (AP) gear change means (BV) coupled to a train (T1), and ii) a management device (DG) managing the operation of said transmission chain, **characterized in that** it further comprises a control device ( DC) according to one of the preceding claims.

6. Vehicle according to Claim 5, **characterized in that** the said management device (DG) uses said compensation torque when said transmission chain is in a life situation chosen from among a phase for regulating the operating speed of said first driving machine (MM1), and a start-up and engagement phase of said first prime mover (MM1) during a driving phase.

7. Vehicle according to Claim 5 or 6, **characterized in that** the said management device (DG) comprises said control device (DC).

8. Vehicle according to one of Claims 5 to 7, **characterized in that** the said second driving machine (MM2) is chosen from among an electric motor. a hydraulic machine, a pneumatic machine and a flywheel.

9. Vehicle according to one of Claims 5 to 8, **characterized in that** the said first driving machine (MM1) is a heat engine.

10. Vehicle according to one of Claims 5 to 9, **characterized in that** it is of the automobile type.
